# EUROPEAN PATENT APPLICATION

(11) **EP 1 833 135 A1**
(43) Date of publication of application: **12.09.2007**
(21) Application number: 06110728.0
(22) Date of filing: 06.03.2006
(51) Int. Cl.: H02H 7/30, H02H 3/02

(54) **Switchgear with a plurality of outgoing feeders and method for interrupting an overcurrent.**

(71) Applicant: ABB Technology Ltd, 8050 Zürich (CH)
(72) Inventor: Rothman, Bengt, SE-723 36, Västerås (SE); Liljestrand, Lars, SE-722 42, Västerås (SE); Backman, Magnus, SE-722 46, Västerås (SE); Dahlgren, Mikael, SE-724 64, Västerås (SE)
(74) Representative: Löfgren, Jonas

(57) **Abstract**

The invention relates to a switchgear for distribution of electrical power comprising an incoming feeder (12) provided with a circuit breaker (14) with short-circuit current interrupting capability, and at least one outgoing feeder (13a-13d) provided with a switching device (15a-15d) with capability of switching in and out, at the rated load current of the switchgear, a load connected to the outgoing feeder and with capability of conducting but not interrupting a short-circuit current. The invention also relates to a method for interrupting an overcurrent flowing through an electrical power distribution switchgear.

## Description

### FIELD OF THE INVENTION AND PRIOR ART

The present invention relates to a switchgear for distribution of electrical power comprising an incoming feeder, which is provided with a circuit breaker with short-circuit current interrupting capability, and two or more outgoing feeders connected to the incoming feeder. The invention also relates to a method for interrupting an overcurrent flowing through an electrical power distribution switchgear.

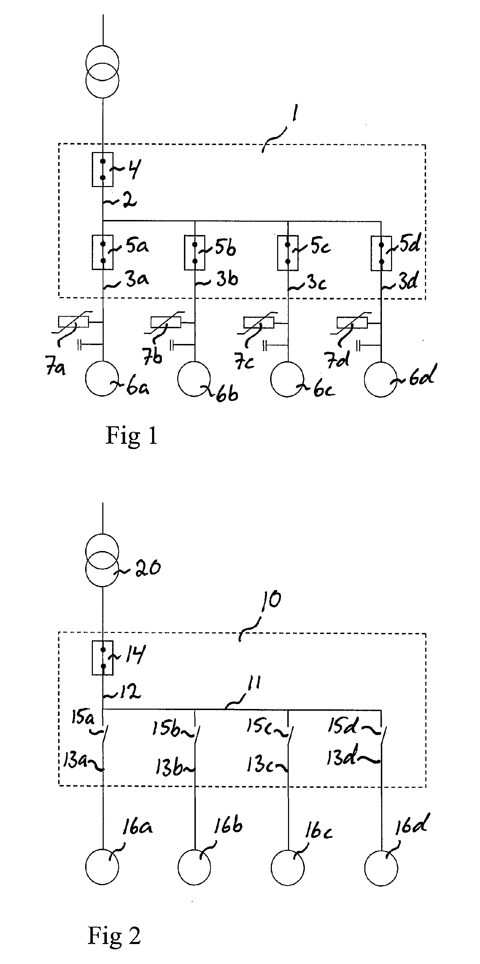

A switchgear may be used in a distribution or transmission network for distributing electrical power to different loads, for instance within an industrial plant. A conventional medium voltage switchgear for distribution of electrical power is illustrated in Fig 1 of the appended drawings. This prior art switchgear 1 comprises an incoming feeder 2 and a number of outgoing feeders 3a-3d connected to the incoming feeder 2. A circuit breaker 4 is arranged in the incoming feeder and a circuit breaker 5a-5d is also arranged in each outgoing feeder. The circuit breakers 5a-5d of the outgoing feeders are used for switching in and out the loads 6a-6d connected to the outgoing feeders and are also to be capable of interrupting any short-circuit current that may flow through the switchgear 1. The circuit breakers 4, 5a-5d are rated for the system voltage, the nominal currents and the short-circuit currents. The short-circuit current could be as high as 100 times the nominal current. The circuit breakers 5a-5d of the outgoing feeders are in many cases, particularly for industrial applications, operated very frequently to switch loads 6a-6d in and out, which implies that these circuit breakers have to be designed to withstand a large number of switching operations. The demands on the circuit breakers result in a high cost for the switchgear. Furthermore, the opening or closing of a conventional circuit breaker, which uses movable mechanical contacts and electrical arcs for interruption of currents, is a transient operation that could cause transient overvoltages and high inrush currents, which often makes it necessary to protect the loads 6a-6d by means of surge protection equipment, such as surge arresters 7a-7d, which implies an added cost for the customer. This problem can be avoided by using semiconductor based circuit breakers. However, semiconductor based circuit breakers are very costly.

### SUMMARY OF THE INVENTION

The object of the present invention is to provide a novel type switchgear for distribution of electrical power.

According to the invention, this object is achieved by a switchgear having the features defined in claim 1.

In the inventive switchgear, the incoming feeder is provided with a circuit breaker with short-circuit current interrupting capability and at least one of the outgoing feeders, preferably each one of them, is provided with a switching device with capability of switching in and out, at the rated load current of the switchgear, a load connected to the outgoing feeder and with capability of conducting but not interrupting a short-circuit current. Thus, said switching devices of the outgoing feeders are of a type designed to have switching capability so as to be able to switch in and out a load at the rated load current, and short-circuit current conducting capability so as to be able to conduct any short-circuit current flowing through the switchgear without being damaged, but designed to lack short-circuit current interrupting capability. In the inventive switchgear, a short-circuit current interrupting capability is only assigned to the circuit breaker of the incoming feeder. Hereby, the outgoing feeders can be provided with switching devices optimized for performing a large number of switching operations without causing undesired electrical disturbances, such as transient overvoltages, without having to take into account any short-circuit current interrupting capacity of the switching device. This will make it possible to accomplish an efficient and reliable switchgear at relatively low cost.

The invention represents a new thinking within the field of power distribution switchgears and is based on the inventive realization that the required ability of the switchgear to interrupt any short-circuit current flowing through the switchgear can be managed by means of only one circuit breaker arranged in the incoming feeder if the outgoing feeders are provided with switching devices capable of conducting such a short-circuit current.

Further advantages as well as advantageous features of the inventive switchgear will appear from the following description and the dependent claims.

The invention also relates to a method for interrupting an overcurrent flowing through an electrical power distribution switchgear comprising an incoming feeder provided with a circuit breaker and two or more outgoing feeders, each of which being connected to the incoming feeder and being provided with a switching device for switching in and out a load connected to the outgoing feeder, wherein:
- an overcurrent occurring in one of said outgoing feeders when the switching device of this outgoing feeder is closed is conducted to the circuit breaker of the incoming feeder via this switching device,
- said overcurrent is interrupted by opening the circuit breaker of the incoming feeder, and
- the switching device of the outgoing feeder subjected to said overcurrent is opened after the opening of the circuit breaker of the incoming feeder.

Thus, an overcurrent, such as a short-circuit current, occurring in any of the outgoing feeders is interrupted by the circuit breaker of the incoming feeder, whereupon the outgoing feeder subjected to said overcurrent is disconnected by opening the switching device of this outgoing feeder. Hereby, only one circuit breaker is required in order to interrupt an overcurrent flowing through any of the outgoing feeders. When the overcurrent has been interrupted by the circuit breaker, the switching device of the outgoing feeder subjected to said overcurrent is opened under no-load conditions, i.e. when no current is flowing through the switching device in question. Hereby, the switching devices of the outgoing feeders do not have to be designed to be capable of interrupting any overcurrents.

### BRIEF DESCRIPTION OF THE DRAWINGS

With reference to the appended drawings, a specific description of preferred embodiments of the invention cited as examples follows below. In the drawings:
- Fig 1: is a schematic outline diagram of a prior art switch-gear for distribution of electrical power,
- Fig 2: is a schematic outline diagram of a first embodiment of a switchgear according to the present invention,
- Fig 3: is a schematic outline diagram of a second embodiment of a switchgear according to the invention, and
- Fig 4: is a schematic outline diagram of a third embodiment of a switchgear according to the invention.

### DETAILED DESCRIPTION OF PREFERRED EMBODIMENTS OF THE INVENTION

Fig 2 illustrates an embodiment of a switchgear 10 according to the present invention for distribution of electrical power. The switchgear comprises an incoming feeder 12 and a number of outgoing feeders 13a-13d connected to the incoming feeder 12.

The outgoing feeders 13a-13d are connected in parallel with each other and connected to the outgoing feeder 12 via a busbar 11. In the illustrated example, the switchgear 10 is provided with four outgoing feeders, but the number of outgoing feeders could be larger as well as fewer than that. A circuit breaker 14 with short-circuit current interrupting capability is arranged in the incoming feeder 12. The main purpose of this circuit breaker 14 is to interrupt any short-circuit current flowing through the switchgear 10. The circuit breaker 14 could be a conventional circuit breaker using movable mechanical contacts and electrical arcs for interruption of currents or a semiconductor based circuit breaker. The circuit breaker 14 is closed in the normal operating state of the switchgear.

Each one of the outgoing feeders 13a-13d is provided with a switching device 15a-15d with capability of switching in and out, at the rated load current of the switchgear 10, a load 16a-16d connected to the associated outgoing feeder and with capability of conducting but not interrupting a short-circuit current. The main purpose of the switching devices 15a-15d is to effect energizing and disconnection of the associated loads 16a-16d under normal operating conditions with normal load currents. If a short-circuit current would flow through one of these switching devices 15a-15d when closed, the switching device is to remain closed and conduct the short-circuit current so as to allow the circuit breaker 14 to interrupt the current.

Preferably, switching devices of a type capable of closing and interrupting the current path in a transient-free manner are used in the outgoing feeders 13a-13d, i.e. switching devices designed for transient free switching of electrical current. The switching devices 15a-15d may with advantage be designed to be capable of achieving arc-free interruption of electrical current. The switching devices 15a-15d should be designed for frequent and a large number of switching operations.

The switching devices 15a-15d are suitably semiconductor based. Such a semiconductor based switching device may for instance be a semiconductor switching device comprising one or more semiconductor components, for instance in the form of thyristors or IGBT:s, for interrupting the current path through the switching device. Alternatively, such a semiconductor based switching device may be a hybrid switching device, for instance of the type disclosed in US 6 960 844 B1, comprising a combination of one or more mechanical contacts and one or more semiconductor components, for instance in the form of diodes, thyristors or IGBT:s, for interrupting the current path through the switching device.

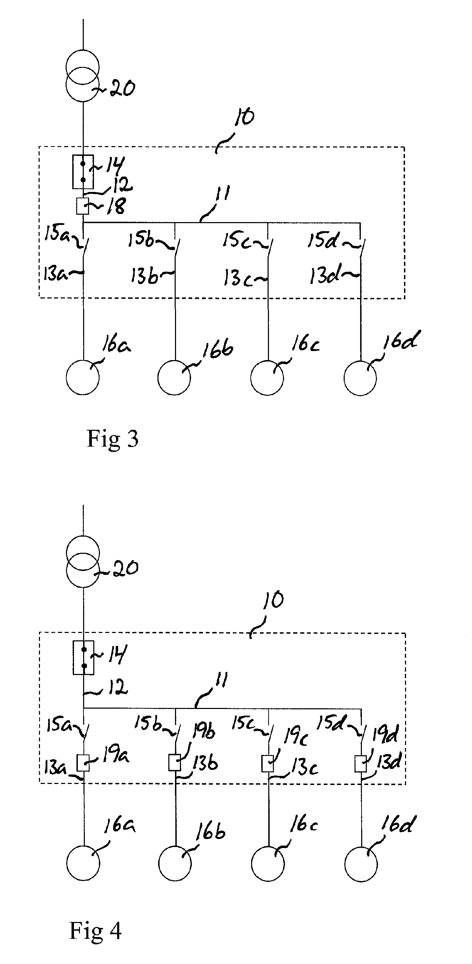

The embodiment illustrated in Fig 3 corresponds to the one illustrated in Fig 2, with the exception that a current limiter 18 is arranged in the incoming feeder 12 in series with the circuit breaker 14.

The embodiment illustrated in Fig 4 corresponds to the one illustrated in Fig 2, with the exception that a current limiter 19a-19d is arranged in each outgoing feeder 13a-13d in series with the associated switching device 15a-15d.

The inventive switchgear 10 is with advantage a medium voltage switchgear, i.e. designed for a system voltage of 1-52 kV, but could also be designed for lower and higher system voltages.

In Figs 2-4, the incoming feeder 12 of the switchgear 10 is connected to a transformer 20 and each one of the outgoing feeders 13a-13d is connected to a load 16a-16d, which for instance may be an electric motor or any other electric apparatus.

An overcurrent occurring in one of the outgoing feeders 13a-13d of the switchgear when the switching device 15a-15d of this outgoing feeder is closed is to be conducted to the circuit breaker 14 of the incoming feeder 12 via this switching device. Said overcurrent is then interrupted by opening the circuit breaker 14 of the incoming feeder 12, whereupon the switching device 15a-15d of the outgoing feeder 13a-13d subjected to said overcurrent is opened. Thus, the last-mentioned switching device is opened under no-load conditions when the circuit breaker 14 of the incoming feeder 12 is interrupting the current path through the switchgear 10. The circuit breaker 14 of the incoming feeder 12 is then closed after the opening of the last-mentioned switching device so as to allow power supply to the other outgoing feeders of the switchgear. Hereby, the current path through the outgoing feeder subjected to the overcurrent remains open, whereas the current path through the other outgoing feeders of the switchgear is re-established.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A switchgear for distribution of electrical power comprising:
- an incoming feeder (12) provided with a circuit breaker (14) with short-circuit current interrupting capability; and
- two or more outgoing feeders (13a-13d) connected to the incoming feeder (12),
**characterized in that** at least one of the outgoing feeders (13a-13d), preferably each one of them, is provided with a switching device (15a-15d) with capability of switching in and out, at the rated load current of the switchgear, a load connected to the outgoing feeder and with capability of conducting but not interrupting a short-circuit current.

2. A switchgear according to claim 1, **characterized in that** said switching device (15a-15d) is a switching device with capability of performing said switching in a transient-free manner.

3. A switchgear according to claim 2, **characterized in that** said switching device (15a-15d) is a switching device with capability of achieving arc-free interruption of the current path through the switching device.

4. A switchgear according to any of claims 1-3, **characterized in that** said switching device (15a-15d) comprises a combination of one or more mechanical contacts and one or more semiconductor components for interrupting the current path through the switching device.

5. A switchgear according to any of claims 1-3, **characterized in that** said switching device (15a-15d) is a semiconductor switching device comprising one or more semiconductor components for interrupting the current path through the switching device.

6. A switchgear according to any of claims 1-5, **characterized in that** a current limiter (19a-19d) is arranged in series with said switching device (15a-15d) in the associated outgoing feeder (13a-13d).

7. A switchgear according to any of claims 1-6, **characterized in that** the incoming feeder (12) is provided with a current limiter (18) arranged in series with the circuit breaker (14).

8. A method for interrupting an overcurrent flowing through an electrical power distribution switchgear comprising an incoming feeder (12) provided with a circuit breaker (14) and two or more outgoing feeders (13a-13d), each of which being connected to the incoming feeder (12) and being provided with a switching device (15a-15d) for switching in and out a load connected to the outgoing feeder, wherein:
- an overcurrent occurring in one of said outgoing feeders (13a-13d) when the switching device (15a-15d) of this outgoing feeder is closed is conducted to the circuit breaker (14) of the incoming feeder (12) via this switching device,
- said overcurrent is interrupted by opening the circuit breaker (14) of the incoming feeder (12), and
- the switching device (15a-15d) of the outgoing feeder (13a-13d) subjected to said overcurrent is opened after the opening of the circuit breaker (14) of the incoming feeder (12).

9. A method according to claim 8, wherein the circuit breaker (14) of the incoming feeder (12) is closed after the opening of the switching device (15a-15d) of the outgoing feeder (13a-13d) subjected to said overcurrent so as to allow power supply to the other outgoing feeders of the switchgear.
